# FASCICULE DE BREVET EUROPEEN

(11) **EP 0 552 113 B1**
(45) Date de publication et mention de la délivrance du brevet: **26.03.1997**
(21) Numéro de dépôt: 93420007.2
(22) Date de dépôt: 08.01.1993
(51) Int. Cl.: H01H 71/00, H01H 9/02

(54) **Combiné disjoncteur et sectionneur de neutre à capot d'isolement**
Kombinierter Schutzschalter und Nulleiterschalter mit einer Isolationskappe
Combined circuit breaker and neutral line switch with an insulator cap

(30) Priorité: 13.01.1992 FR 9200335
(43) Date de publication de la demande: 21.07.1993
(73) Titulaire: SCHNEIDER ELECTRIC SA, 92100 Boulogne Billancourt (FR)
(72) Inventeur: Reynaud, François, F-38050 Grenoble Cedex 9 (FR); Ducroquet, Jean-Louis, F-38050 Grenoble Cedex 9 (FR)
(74) Mandataire: Hecké, Gérard

(56) Documents cités:
- CH-A- 510 934
- CH-A- 672 859
- DE-A- 3 029 094
- DE-C- 3 820 113
- DE-U- 1 917 423

## Description

L'invention est relative à un combiné disjoncteur et sectionneur de neutre comprenant un assemblage côte à côte d'un bloc de base renfermant un disjoncteur, et d'un bloc auxiliaire de logement d'un sectionneur de neutre, les deux blocs étant formés par des boîtiers isolants de profils conjugués autorisant l'accolement des grandes faces latérales du disjoncteur et du sectionneur de neutre, le disjoncteur ayant une paire de bornes de phase agencées sur les petites faces latérales opposées du premier boîtier, la borne aval de phase ayant une cage, et étant agencée pour recevoir une barre de phase en deux endroits différents, situés en une première position dans laquelle la barre de phase est engagée dans une encoche de la cage, et une deuxième position dans laquelle ladite barre de phase est insérée dans une échancrure du boîtier entre la vis de serrage et une plage de contact en forme d'étrier, et le sectionneur de neutre ayant une paire de bornes de neutre agencées sur les petites faces latérales opposées du deuxième boîtier, la borne aval de neutre étant destinée à recevoir une barre de neutre.

L'ensemble est agencé pour autoriser l'ouverture des contacts de phase du disjoncteur, avant la séparation des contacts de neutre du sectionneur de neutre. D'autre part, la fermeture du sectionneur de neutre doit s'effectuer avant celle du disjoncteur. L'intervention du disjoncteur à la suite d'un défaut s'opère sans interférer avec la deuxième manette. Le sectionneur de neutre peut rester dans l'état fermé, en l'absence d'actionnement manuel de la deuxième manette.

En cas d'intervention sur cette deuxième manette, le sectionnement des contacts de neutre permet d'intervenir en toute sécurité sur l'installation électrique. La manoeuvre sur la deuxième manette s'effectue au moyen d'un tournevis à l'encontre d'une première force antagoniste résultant d'un point dur au début de la course d'ouverture, puis d'une deuxième force antagoniste du ressort de pression de contact associé au contact mobile de neutre.

La borne aval de phase du disjoncteur autorise un raccordement par câble et un raccordement par barre, ce dernier pouvant être opéré en deux endroits différents. Lors de l'association avec un sectionneur de neutre ayant une barre de neutre connectée dans la borne aval de neutre, la barre de phase peut être utilisée dans la seule première position, étant donné que la barre de neutre passe devant l'échancrure d'accès à la borne de phase.

La proximité de la barre de neutre avec la borne de phase pose un problème d'isolement électrique, avec un risque de claquage électrique en fonction de l'environnement extérieur. Il serait possible de rémédier à ce problème en supprimant l'échancrure d'accès à la borne de phase. Une telle modification nécessiterait un nouveau boîtier de disjoncteur unipolaire au détriment de la standardisation.

L'objet de l'invention consiste à réaliser un combiné disjoncteur et sectionneur de neutre à tenue diélectrique améliorée.

Le combiné disjoncteur sectionneur de neutre selon l'invention est caractérisé en ce que la borne aval de neutre est adjacente à l'échancrure d'accès à la borne aval de phase, et qu'un capot de protection en matériau isolant moulé est monté par clipsage sur un organe d'accrochage prévu sur une saillie du deuxième boîtier, ledit capot ayant une protubérance latérale destinée à masquer l'échancrure de la borne aval de phase pour respecter la distance d'isolement de la barre de neutre par rapport à la barre de phase se trouvant dans la première position.

Selon un mode de réalisation préféré, le capot de protection comporte un crochet de retenue susceptible d'occuper une position de verrouillage avec l'organe d'accrochage lors du clipsage, et une position de déverrouillage suite à une action manuelle de déblocage s'exerçant à travers un orifice du deuxième boîtier.

L'adjonction du capot de protection permet de garantir la distance d'isolement entre des pièces de tensions différentes, et de conserver le boîtier standard du disjoncteur unipolaire.

D'autres avantages et caractéristiques additionnelles ressortiront plus clairement de la description qui va suivre d'un mode de réalisation de l'invention, donné à titre d'exemple et représenté aux dessins annexés, dans lesquels:

La figure 1 est une vue schématique en perspective d'un combiné disjoncteur et sectionneur de neutre en position accolée.

La figure 2 montre une vue en plan de la figure 1.

La figure 3 représente une vue en élévation du sectionneur de neutre selon l'invention, le couvercle du boîtier étant enlevé.

La figure 4 est une vue schématique de la borne aval de phase du disjoncteur selon la figure 1.

La figure 5 montre une vue en perspective du capot de protection selon l'invention.

Les figures 6 et 7 représentent des vues en perspective du sectionneur de neutre, avant et après clipsage du capot de protection.

La figure 8 est une vue de gauche du combiné de la figure 1.

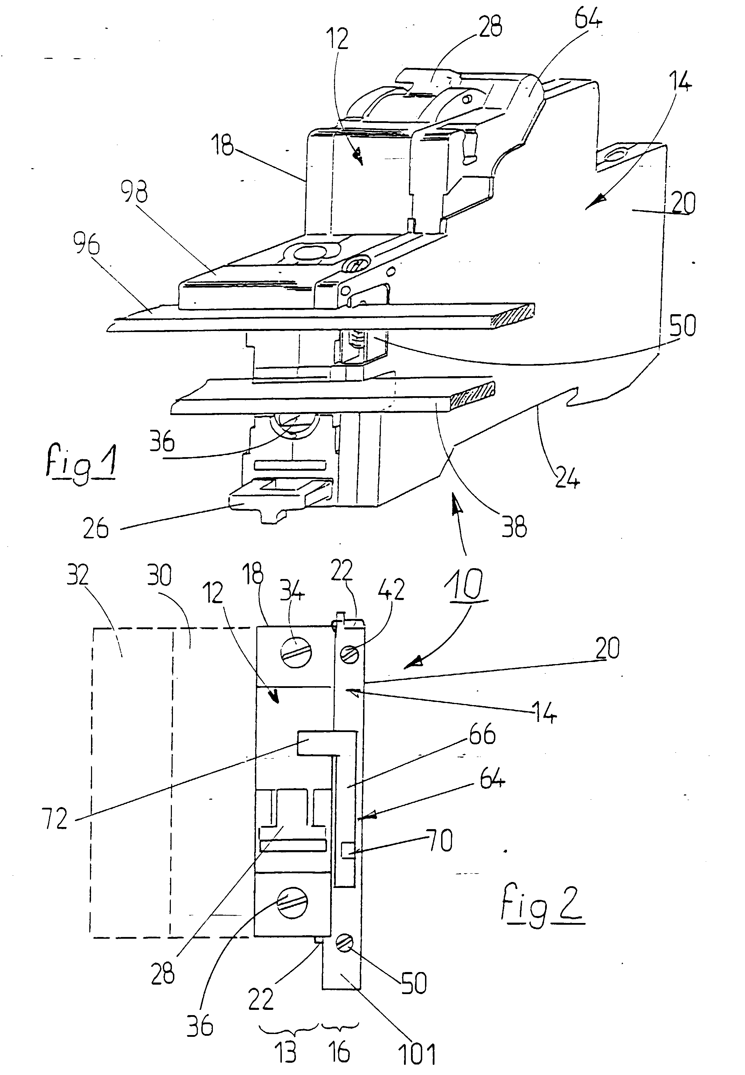

Sur les figures 1 à 3, un combiné disjoncteur et sectionneur de neutre, désigné par le repère général 10, comporte un assemblage côte à côte d'un bloc de base 12 renfermant un disjoncteur 13, et d'un bloc auxiliaire 14 de logement d'un sectionneur de neutre 16. Le disjoncteur 13 et le sectionneur de neutre 16 sont logés dans des boîtiers 18,20 isolants modulaires, ayant des profils conjugués pour autoriser l'accolement des grandes faces latérales des deux blocs 12,14. Le boîtier 20 du sectionneur de neutre 16 comporte des pattes d'encliquetage 22 permettant la fixation du bloc auxiliaire 14 sur la partie droite du bloc de base 12 lors de l'assemblage par le client du combiné 10.

Le fond de chaque boîtier 18,20 est doté d'un socle de fixation 24 permettant le montage du combiné 10 sur un rail support (non représenté). La fixation sur le rail s'opère au moyen d'un verrou 26 solidaire du disjoncteur 13.

Le disjoncteur 13 comprend d'une manière classique une paire de contacts séparables, un mécanisme de commande d'ouverture et de fermeture actionné manuellement par une première manette (28), une chambre d'extinction de l'arc, et un déclencheur magnétothermique agencé pour déclencher le mécanisme lorsque le courant parcourant le disjoncteur dépasse un seuil prédéterminé. A titre d'exemple, un tel disjoncteur est décrit dans le brevet français 2.616.583 de la demanderesse. Le disjoncteur 13 représenté aux figures 1 et 2 est de type unipolaire, mais il est clair que le disjoncteur peut être multipolaire. Dans ce dernier cas, le bloc de base 12 comporte des modules 30,32 supplémentaires (en pointillé sur la figure 2), de structures identiques, et la barre 38 serait remplacée par un peigne multipolaire ou des câbles.

Le disjoncteur 13 comprend de plus une paire de bornes de phase 34,36 agencées sur les petites faces latérales opposées du boîtier 18, la borne aval 36 de phase est associée à une barre de phase 38 pour l'alimentation du disjoncteur. L'autre borne amont 34 de phase est destinée à recevoir un câble de ligne (non représenté). La barre de phase 38 s'étend perpendiculairement au plan de jonction des deux blocs 12,14.

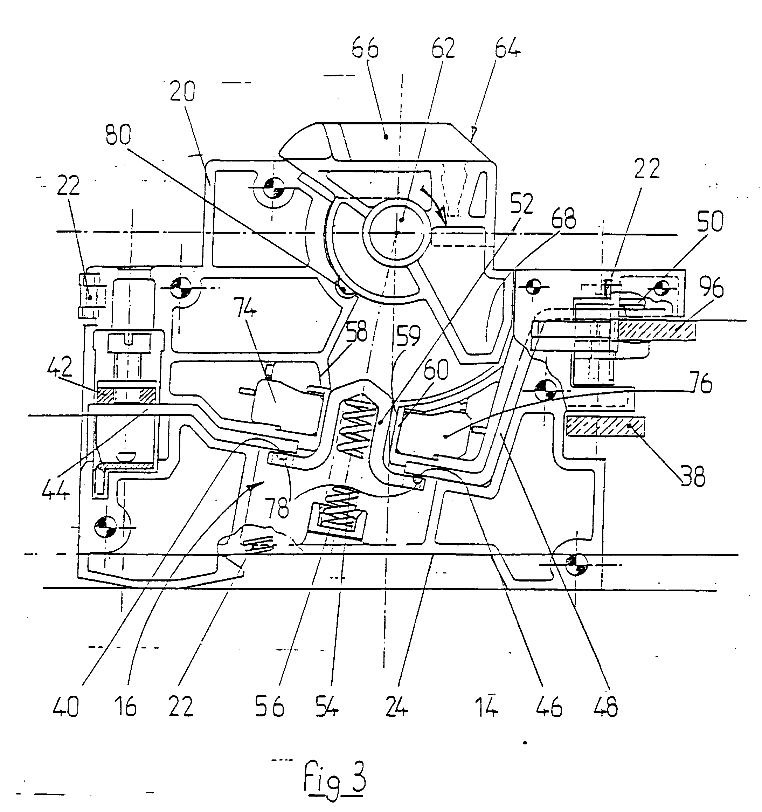

Le sectionneur de neutre 14 (figure 3), comporte un premier contact fixe 40 de neutre relié à une barre amont 42 de neutre par un premier conducteur 44, et un deuxième contact fixe 46 de neutre connecté par un deuxième conducteur 48 à une borne aval 50 de neutre. Un pont de contact 52 mobile en translation coopère avec les deux contacts fixes 40,46, et est sollicité en position de fermeture par un ressort 54 de pression de contact, prenant appui sur une protubérance 56 à la base du boîtier 20.

Le pont de contact 52 de neutre présente une partie centrale en forme de U renversé, à l'intérieur de laquelle s'étend le ressort 54. La partie centrale est prolongée par deux extensions recourbées à angle droit selon des sens opposés, et équipées chacune d'une pièce de contact coopérant avec le contact fixe de neutre 40,46 correspondant. Deux nervures 58,60 venant de moulage avec le boîtier 20 isolant forment un couloir 59 de guidage du pont de contact 52 durant sa course en translation entre les positions d'ouverture et de fermeture.

A l'opposé de la protubérance 56 se trouve un axe 62, sur lequel est montée à rotation une deuxième manette 64 déplaçable entre une position de fermeture (figure 3) et une position d'ouverture. La manette 64 comporte un élément préhenseur 66 accessible de l'extérieur par l'opérateur, une partie interne en forme de came 68 destinée à pousser le pont de contact 52 vers la position d'ouverture lors d'un pivotement de la manette 64 dans le sens horaire (voir flèche).

La ligne d'action du ressort 54 passe par l'axe 62, et s'étend parallèlement à la course de déplacement du pont de contact 52 mobile, le long du couloir 59 de guidage.

L'élément préhenseur 66 de la manette 64 comporte une entaille 70 d'introduction d'un tournevis, et une saillie 72 susceptible d'interférer avec la trajectoire de la première manette 28.

L'ensemble est agencé pour autoriser d'une part la coupure des contacts de phase, avant la séparation des contacts de neutre 40,52,46, et d'autre part la fermeture de ces derniers avant celle des contacts de phase. L'actionnement manuel par la première manette 28 ou automatique par le déclencheur des contacts de phase du disjoncteur 13 peut être opéré alors que les contacts de neutre 40,52,46 restent fermés.

Deux pièces polaires 74,76 métalliques en matériau ferromagnétique sont positionnées dans des alvéoles du boîtier 20 du sectionneur de neutre 16 de part et d'autre du couloir 59 de guidage du pont de contact 52, et à l'opposé des contacts fixes de neutre 40,46 le long des conducteurs 44,48.

Les pièces polaires 74,76 occupent sensiblement toute la largeur du boîtier 20, et se trouvent au niveau de la zone d'arc du disjoncteur 13 adjacent. La zone d'arc est formée principalement par la chambre de formation d'arc, et la chambre d'extinction d'arc du disjoncteur 13. Les pièces polaires 74,76 sont formées soit par une masse monobloc en acier, soit par un empilage de tôles.

La présence des pièces polaires 74,76 permet de garantir la bonne tenue des contacts du sectionneur de neutre, notamment pour éviter la répulsion des contacts de neutre en position de fermeture du sectionneur de neutre.

Le sectionneur de neutre 16 reste fermé pendant la phase de détection du court-circuit par le déclencheur du disjoncteur 13. Après séparation automatique des contacts du disjoncteur suite au déclenchement, une action manuelle sur la deuxième manette 64 permet d'ouvrir le sectionneur de neutre 16, par exemple lors d'une intervention en cas de panne sur la ligne d'un récepteur. Il suffit d'introduire un tournevis dans l'entaille 70 de l'élément préhenseur 66 pour faire pivoter la deuxième manette 64 dans le sens horaire, à l'encontre d'une première force antagoniste résultant d'un point dur 80 au début de la course d'ouverture, puis de la deuxième force antagoniste du ressort 54 lorsque la came 68 agit sur la partie centrale du pont de contact 52.

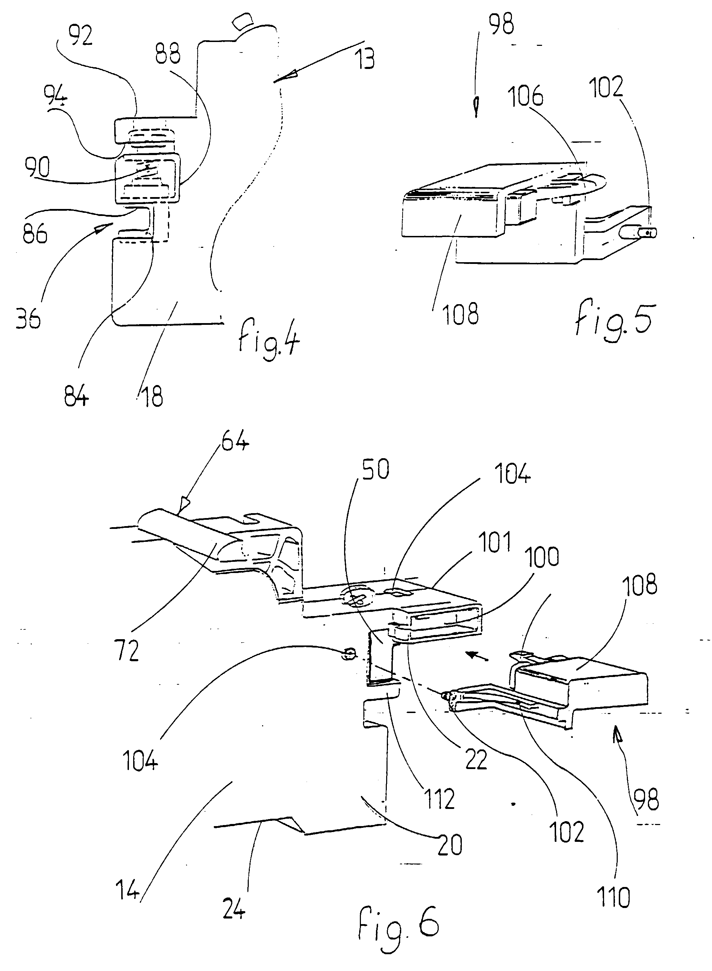

On remarque sur la figure 4 que la borne aval 36 de phase du disjoncteur 13 unipolaire selon la figure 1 comporte une cage 84 à encoche 86 coopérant avec un étrier 88 de serrage, lequel joue le rôle de plage de contact. Une vis 90 de serrage dont la tête est accessible par un orifice 92 du boîtier 18, est logée dans un écrou de la cage. Le boîtier 18 comprend une échancrure 94 au niveau de la tête de vis 90. La barre 38 de phase peut occuper deux positions différentes en étant logée transversalement au choix dans l'encoche 86 inférieure (cas de la figure 1), ou dans l'échancrure 94 supérieure, suivi du coincement entre la tête de vis 90 et la face supérieure de l'étrier 88.

Si la barre de phase 38 est positionnée dans l'encoche 86 inférieure, il est alors possible d'insérer une barre de neutre 96 dans la borne aval de neutre 50, laquelle présente une structure à griffe (figures 1 et 3). Les deux barres 38,96 superposées s'étendent parallèlement l'une à l'autre dans la direction d'accolement des deux blocs 12,14, et en alignement avec un coupe-circuit à fusible du type à puit (non représenté).

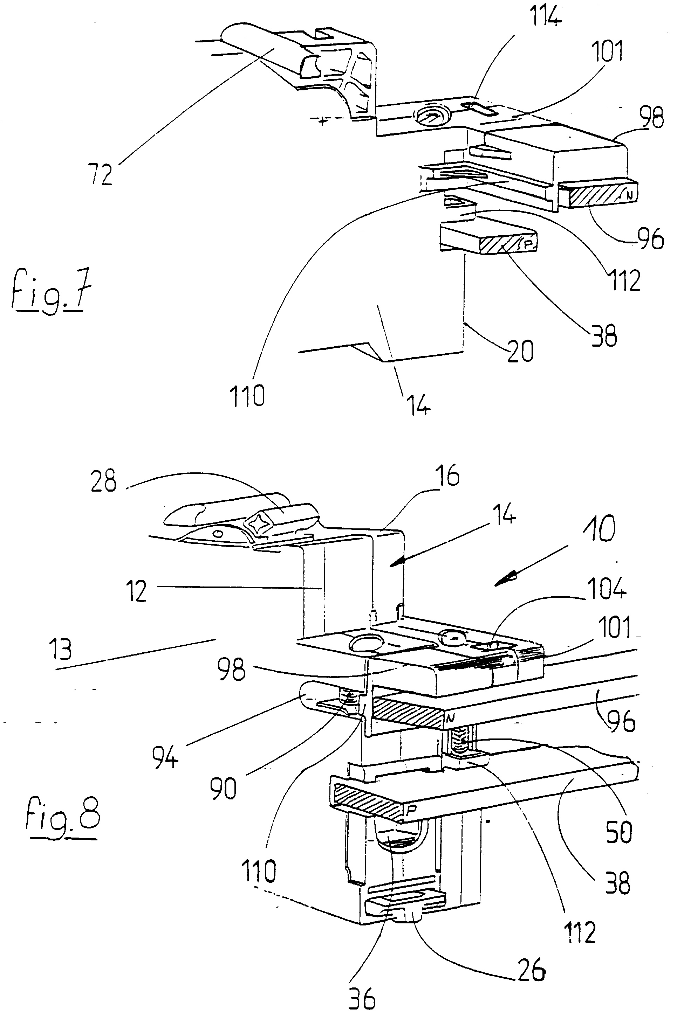

Pour garantir l'isolement entre la barre de neutre 96 et la partie supérieure de la borne de phase 36 au niveau de l'échancrure 94, un capot 98 (figures 5 à 8) de protection en matériau isolant moulé est monté par clipsage sur un organe d'accrochage 100 prévu sur une saillie 101 du boîtier 20. Le capot 98 comporte un plot 102 de guidage destiné à s'engager dans un trou 104 du boîtier 20, et un crochet 106 de retenue susceptible de coopérer avec l'organe d'accrochage 100 pour assurer le clipsage du capot 98 sur la grande face latérale du boîtier 20 (figures 6 et 7). La face supérieure 108 du capot 98 est coplanaire avec les faces conjuguées des deux boîtiers 18,20, après l'opération de clipsage (figure 8).

Le capot 98 comporte en plus une protubérance 110 ayant une surface latérale destinée à masquer l'échancrure 94 de la borne de phase 36 pour respecter les distances d'isolement avec la barre de neutre 96. Le plot 102 de guidage est fixé sur la partie antérieure de la protubérance 110.

La mise en oeuvre du capot 98 de protection s'effectue de la manière suivante:
- Sur la figure 6, le capot 98 est clipsé en usine sur l'organe d'accrochage 100 du sectionneur de neutre 16. L'opération de clipsage s'opère par déplacement latéral du capot 98 dans le même sens d'accolement du bloc de base 12.

Sur la figure 7, le capot 98 est solidarisé au sectionneur de neutre 16. Il est alors possible de lui adjoindre un disjoncteur 13 unipolaire pour former le combiné 10.

Sur la figure 8, la fixation des pattes 22 d'encliquetage du bloc auxiliaire 14 s'opère automatiquement au cours du mouvement d'accolement du bloc de base 12, ainsi que l'insertion de la protubérance 110 dans l'échancrure 94 de la borne de phase 36. Les barres de phase 38 et de neutre 96 peuvent ensuite être installées transveralement et connectées dans les bornes 36,50 respectives. La barre de phase 38 est séparée de la borne de neutre 50 par une barrière 112 isolante du boîtier 20. La barre de neutre 96 est isolée de la borne de phase 38 par le capot 98 de protection.

Le capot 98 clipsé sur le sectionneur de neutre (figure 7) peut être facilement démonté par une action de déblocage opérée sur le crochet 106 de retenue au moyen d'un tournevis traversant un orifice 114.

## Revendications

1. Combiné disjoncteur et sectionneur de neutre comprenant un assemblage côte à côte d'un bloc de base (12) renfermant un disjoncteur (13), et d'un bloc auxiliaire (14) de logement d'un sectionneur de neutre (16), les deux blocs (12,14) étant formés par des boîtiers (18,20) isolants de profils conjugués autorisant l'accolement des grandes faces latérales du disjoncteur (13) et du sectionneur de neutre (16), le disjoncteur (13) ayant une paire de bcrnes de phase (34,36) agencées sur les petites faces latérales opposées du premier boîtier (18), la borne (36) aval de phase ayant une cage (84), et étant agencée pour recevoir une barre de phase (38) en deux endroits différents, situés en une première position dans laquelle la barre de phase (38) est engagée dans une encoche (86) de la cage (84), et une deuxième position dans laquelle ladite barre de phase (38) est insérée dans une échancrure (94) du boîtier (18) entre la vis (90) de serrage et une plage de contact (88) en forme d'étrier, et le sectionneur de neutre (16) ayant une paire de bornes de neutre (42,50) agencées sur les petites faces latérales opposées du deuxième boîtier (20), la borne (50) aval de neutre étant destinée à recevoir une barre de neutre (96), caractérisé en ce que la borne (50) aval de neutre est adjacente à l'échancrure (94) d'accès à la borne (36) aval de phase, et qu'un capot (98) de protection en matériau isolant moulé est monté par clipsage sur un organe d'accrochage (100) prévu sur une saillie (101) du deuxième boîtier (20), ledit capot (98) ayant une protubérance (110) latérale destinée à masquer l'échancrure (94) de la borne (36) aval de phase pour respecter la distance d'isolement de la barre de neutre (96) par rapport à la barre de phase (38) se trouvant dans la première position.

2. Combiné disjoncteur et sectionneur de neutre, selon la revendication 1, caractérisé en ce que le capot (98) de protection comporte un crochet (106) de retenue susceptible d'occuper une position de verrouillage avec l'organe d'accrochage (100) lors du clipsage, et une position de déverrouillage suite à une action manuelle de déblocage s'exerçant à travers un orifice (114) du deuxième boîtier (20).

3. Combiné disjoncteur et sectionneur de neutre, selon la revendication 1 ou 2, caractérisé en ce que le capot (98) est équipé d'un plot (102) de guidage coopérant avec un trou (104) du deuxième boîtier (20) lors de l'opération de clipsage.

4. Combiné disjoncteur et sectionneur de neutre, selon la revendication 1, caractérisé en ce que la barre de phase (38) est séparée de la borne (50) aval de neutre par une barrière (112) isolante équipant le deuxième boîtier (20).

5. Combiné disjoncteur et sectionneur de neutre, selon la revendication 1, caractérisé en ce que le deuxième boîtier (20) du sectionneur de neutre (16) est adaptable par l'installateur, et comporte des pattes d'encliquetage (22) pour la fixation à droite du premier boîtier (18).

## Patentansprüche

1. Leistungsschalter-Neutralleitertrenner-Kombination mit einem Hauptblock (12) mit einem darin enthaltenen Leistungsschalter (13) und einem seitlich angereihten Hilfsblock (14) zur Aufnahme eines Neutralleitertrenners (16), wobei die beiden Blöcke (12, 14) durch Isolierstoffgehäuse (18, 20) mit aneinander angepaßter Form gebildet sind, die ein Aneinanderreihen der breiten Seitenflächen des Leistungsschalters (13) und des Neutralleitertrenners (16) ermöglichen, der Leistungsschalter (13) zwei an den einander gegenüberliegenden schmalen Seitenflächen des ersten Gehäuses (18) angeordnete Phasenleiterklemmen (34, 36) aufweist, die vordere Phasenleiterklemme (36) einen Käfig (84) aufweist und zur Aufnahme einer Phasenleiterschiene (38) an zwei unterschiedlichen Stellen ausgelegt ist, welche einer ersten Position mit Einsatz der Phasenleiterschiene (38) in eine Aussparung (86) des Käfigs (84) und einer zweiten Position mit Einsatz der genannten Phasenleiterschiene (38) in eine zwischen der Klemmschraube (90) und einem als Bügel ausgebildeten Anschlußstück (88) angeordneten Ausnehmung (94) des Gehäuses (18) entsprechen, der Neutralleitertrenner (16) zwei an den einander gegenüberliegenden schmalen Seitenflächen des zweiten Gehäuses (20) angeordnete Neutralleiterklemmen (42, 50) aufweist und die vordere Neutralleiterklemme (50) zur Aufnahme einer Neutralleiterschiene (96) dient, dadurch gekennzeichnet, daß die vordere Neutralleiterklemme (50) an die Ausnehmung (94) für den Zugang zur vorderen Phasenleiterklemme (36) grenzt und daß eine Isolierstoff-Schutzabdeckung (98) auf ein, an einem Überstand (101) des zweiten Gehäuses (20) ausgebildetes Rastelement (100) aufgeschnappt ist, wobei die genannte Abdeckung (98) einen seitlichen Vorsprung (110) aufweist, der dazu dient, die Ausnehmung (94) der vorderen Phasenleiterklemme (36) abzudecken, um die Einhaltung der Luftstrecke zwischen der Neutralleiterschiene (96) und der in der ersten Position angebrachten Phasenleiterschiene (38) zu gewährleisten.

2. Leistungsschalter-Neutralleitertrenner-Kombination nach Anspruch 1, dadurch gekennzeichnet, daß die Schutzabdeckung (98) einen Rückhaltehaken (106) aufweist, der beim Aufschnappen durch Zusammenwirken mit dem Rastelement (100) eine Verriegelungsstellung und nach manuellem Lösen durch Eingreifen in eine im zweiten Gehäuse (20) ausgebildete Öffnung (114) eine Entriegelungsstellung einnehmen kann.

3. Leistungsschalter-Neutralleitertrenner-Kombination nach Anspruch 1 oder 2, dadurch gekennzeichnet, daß die Abdeckung (98) einen Führungsstift (102) aufweist, der beim Aufschnappen mit einer Öffnung (104) des zweiten Gehäuses (20) zusammenwirkt.

4. Leistungsschalter-Neutralleitertrenner-Kombination nach Anspruch 1, dadurch gekennzeichnet, daß die Phasenleiterschiene (38) durch eine am zweiten Gehäuse (20) ausgebildete Isolierstoffsperre (112) von der vorderen Neutralleiterklemme (50) isoliert ist.

5. Leistungsschalter-Neutralleitertrenner-Kombination nach Anspruch 1, dadurch gekennzeichnet, daß das zweite Gehäuse (20) des Neutralleitertrenners (16) durch den Installateur angebaut werden kann und Schnappzungen (22) zur Befestigung an der rechten Seite des ersten Gehäuses (18) aufweist.

## Claims

1. A combined circuit breaker and neutral disconnector comprising a side by side assembly of a base unit (12) containing a circuit breaker (13), and an auxiliary unit (14) housing a neutral disconnector (16), the two units (12, 14) being formed by insulating cases (18, 20) of conjugate profiles enabling the large side faces of the circuit breaker (13) and neutral disconnector (16) to be adjoined, the circuit breaker (13) having a pair of phase terminals (34, 36) arranged on the opposite small side faces of the first case (18), the front phase terminal (36) having a tunnel (84), and being arranged to receive a phase bar (38) at two different places, situated in a first position in which the phase bar (38) is engaged in a notch (86) of the tunnel (84), and a second position in which said phase bar (38) is inserted in an indentation (94) of the case (18) between the tightening screw (90) and a bracket-shaped contact pad (88), and the neutral disconnector (16) having a pair of neutral terminals (42, 50) arranged on the opposite small side faces of the second case (20), the front neutral terminal (50) being designed to receive a neutral bar (96), characterized in that the front neutral terminal (50) is adjacent to the indentation (94) for access to the front phase terminal (36), and that a protective cover (98) made of moulded insulating material is fitted by clipping onto a latching part (100) provided on a protuberance (101) of the second case (20), said cover (98) having a lateral protuberance (110) designed to mask the indentation (94) of the front phase terminal (36) to respect the isolating distance of the neutral bar (96) with respect to the phase bar (38) located in the first position.

2. The combined circuit breaker and neutral disconnector according to claim 1, characterized in that the protective cover (98) comprises a retaining catch (106) able to occupy a locking position with the latching part (100) when clipping takes place, and an unlocking position following a manual releasing action exerted via an orifice (114) of the second case (20).

3. The combined circuit breaker and neutral disconnector according to claim 1 or 2, characterized in that the cover (98) is equipped with a guide pin (102) operating in conjunction with a hole (104) of the second case (20) when the clipping operation is performed.

4. The combined circuit breaker and neutral disconnector according to claim 1, characterized in that the phase bar (38) is separated from the front neutral terminal (50) by an insulating barrier (112) equipping the second case (20).

5. The combined circuit breaker and neutral disconnector according to claim 1, characterized in that the second case (20) of the neutral disconnector (16) can be fitted by the installer, and comprises clipping lugs (22) for fixing to the right of the first case (18).
